Europäisches Patentamt

European Patent Office

Office européen des brevets

(19)

(11) Veröffentlichungsnummer: **0 302 296 B1**

# (12) EUROPÄISCHE PATENTSCHRIFT

(45) Veröffentlichungstag der Patentschrift: **21.10.92**

(21) Anmeldenummer: **88111599.2**

(22) Anmeldetag: **19.07.88**

Verbunden mit 88905834.3/0377570
(europäische
Anmeldenummer/Veröffentlichungsnummer)
durch Entscheidung vom 14.06.91.

(51) Int. Cl.5: **C08G 18/10**, C08G 18/32,
C08G 18/38, B05D 5/06,
C09D 175/00

(54) **Verfahren zur Herstellung eines mehrschichtigen, schützenden und/oder dekorativen Überzuges auf einer Substratoberfläche.**

(30) Priorität: **04.08.87 DE 3725784**

(43) Veröffentlichungstag der Anmeldung:
**08.02.89 Patentblatt 89/06**

(45) Bekanntmachung des Hinweises auf die
Patenterteilung:
**21.10.92 Patentblatt 92/43**

(84) Benannte Vertragsstaaten:
**AT BE CH DE ES FR GB IT LI NL SE**

(56) Entgegenhaltungen:
**EP-A- 0 046 088**
**DE-A- 2 158 945**

(73) Patentinhaber: **BASF Lacke + Farben AG**
**Glasuritstrasse 1**
**W-4400 Münster(DE)**

(72) Erfinder: **Hille, Hans-Dieter**
**In der Schlade 24**
**W-5060 Bergisch-Gladbach(DE)**
Erfinder: **Dobbelstein, Arnold, Dr.**
**Emil-Nolde-Weg 95**
**W-4400 Münster(DE)**
Erfinder: **Grosch, Horst**
**Am Anger 17**
**W-8702 Leinach(DE)**

(74) Vertreter: **Münch, Volker, Dr. et al**
**c/o BASF Lacke + Farben AG Patentabteilung Glasuritstrasse 1 Postfach 61 23**
**W-4400 Münster(DE)**

EP 0 302 296 B1

# EP 0 302 296 B1

## Beschreibung

Die Erfindung betrifft ein Verfahren zur Herstellung eines mehrschichtigen, schützenden und/oder dekorativen Überzuges auf einer Substratoberfläche, bei welchem

(1) als Basisbeschichtungszusammensetzung eine Beschichtungszusammensetzung aufgebracht wird, die organische Verdünnungsmittel, mindestens ein Urethan- und Harnstoffgruppen enthaltendes Kunstharz, Pigmente, ggf. weitere Kunstharze und sonstige allgemein übliche Zusatzstoffe enthält,

(2) aus der in Stufe (1) aufgebrachten Beschichtungszusammensetzung ein Polymerfilm auf der Substratoberfläche gebildet wird,

(3) auf der so erhaltenen Basisschicht eine geeignete transparente Deckschichtzusammensetzung aufgebracht wird und anschließend

(4) die Basisschicht zusammen mit der Deckschicht eingebrannt wird.

Insbesondere auf dem Gebiet der Automobillackierung, aber auch in anderen Bereichen, besteht ein großes Interesse an Basisbeschichtungszusammensetzungen zur Herstellung von Mehrschichtüberzügen.

In der Automobillackierung haben sich vor allem Zweischichtlackierungen des "Basecoat/Clearcoat"-Typs insbesondere für Metalleffektlackierungen weitgehend durchgesetzt.

"Basecoat/Clearcoat"-Lackierungen werden hergestellt, indem nach Vorlackierung eines pigmentierten Basislackes und kurzer Ablüftzeit ohne Einbrennschritt (Naß-in-naß-Verfahren) ein Klarlack überlackiert wird und anschließend Basislack und Klarlack zusammen eingebrannt werden.

Die Beschichtungszusammensetzungen zur Herstellung dieser Basisschichten müssen nach dem heute üblichen rationellen Naß-in-naß-Verfahren verarbeitbar sein, d.h. sie müssen nach einer möglichst kurzen Vortrocknungszeit ohne Einbrennschritt mit einer transparenten Deckschicht überlackiert werden können, ohne störende Anlöseerscheinungen und "strike-in"-Phänomene zu zeigen.

Bei der Entwicklung von Beschichtungszusammensetzungen für Basisschichten von Metalleffektlacken müssen außerdem noch weitere Probleme gelöst werden. Der Metalleffekt hängt entscheidend von der Orientierung der Metallpigmentteilchen im Lackfilm ab. Ein im Naß-in-naß-Verfahren verarbeitbarer Metalleffekt-Basislack muß demnach Lackfilme liefern, in denen die Metallpigmente nach der Applikation in einer günstigen räumlichen Orientierung vorliegen und in denen diese Orientierung schnell so fixiert wird, daß sie im Laufe des weiteren Lackierprozesses nicht gestört werden kann.

In der EP-A-137 256 wird ein Verfahren zur Herstellung von mehrschichtigen, schützenden und/oder dekorativen Überzügen des Basecoat/Clearcaot Typs offenbart, bei dem die Basisbeschichtzungszusammensetzung Polyurethan- und/oder Polyharnstoffelastomere als Bindemittelkomponenten enthält.

Mit dem in der EP-A-137 256 offenbarten Verfahren können Zweischichtlackierungen, insbesondere Zweischicht-Metalleffektlackierungen hergestellt werden, die einen guten Metalleffekt, gute Haftung und ausgezeichnete Steinschlagbeständigkeit aufweisen.

In neuerer Zeit sind die Automobilhersteller dazu übergegangen, bei der Ausbesserungslackierung Zweikomponentenklarlacke auf Basis von Polyisocyanaten einzusetzen. Diese Klarlacke werden bei Raumtemperatur bzw. Temperaturen, die 80°C nicht übersteigen, ausgehärtet.

Wenn nun bei dem in der EP-A-137 256 offenbarten Verfahren Zweikomponentenklarlacke zur Herstellung der Deckschicht verwendet werden, dann treten zwischen der bei 140°C eingebrannten Originallackierung und der mit Zweikomponenten-Klarlacken ausgeführten Ausbesserungslackierung Farbtondifferenzen auf.

Der vorliegenden Erfindung lag die Aufgabenstellung zugrunde, ein Verfahren zur Herstellung von mehrschichtigen, schützenden und/oder dekorativen Überzügen des Basecoat/Clearcoat-Typs bereitzustellen, das die oben dargelegten Nachteile nicht aufweist.

Diese Aufgabe wird überraschenderweise durch ein Verfahren gemäß des Oberbegriffs des Hauptanspruchs gelöst, das dadurch gekennzeichnet ist, daß die Basisbeschichtungszusammensetzung mindestens ein Urethan- und Harnstoffgruppen enthaltendes Kunstharz enthält, das erhältlich ist, indem

a1) ein Diol, und

a2) ein aliphatisches und/oder cycloaliphatisches Diisocyanat

zu einem isocyanatgruppenhaltigen Präpolymeren (A) umgesetzt werden und die Isocyanatgruppen des Präpolymeren (A) anschließend zumindest zum Teil mit

a3) einem mindestens ein aktives Aminwasserstoffatom enthaltenden Addukt aus einem (Meth)-acrylsäureester, vorzugsweise Acrylsäureester, und einer mindestens zwei Aminwasserstoffatome enthaltenden aliphatischen oder cycloaliphatischen Verbindung

umgesetzt werden.

Die durch die Erfindung erreichten Vorteile sind im wesentlichen darin zu sehen, daß bei Anwendung des erfindungsgemäßen Verfahrens keine Farbtondifferenzen zwischen Original- und Ausbesserungslackie-

2

rung auftreten. Ein weiterer wichtiger Vorteil ist darin zu sehen, daß die erfindungsgemäß in den Basisbeschichtungszusammensetzungen verwendeten Urethan- und Harnstoffgruppen enthaltenden Kunstharze unter Verwendung einer hydroxylgruppenhaltigen a3)-Komponente hergestellt werden können und dann auch ohne Zusatz von Polyolkomponenten zu guten Basisschichten führen. Außerdem können harte Polyestersegmente in das Kunstharzmolekül eingebaut werden, ohne daß es beim Zusatz von Aminoplastharzen zu Unverträglichkeitserscheinungen kommt.

Das erfindungsgemäße Verfahren zeigt neben diesen Vorteilen auch die Vorzüge des in der EP-A-137 256 offenbarten Verfahren.

In der DE-OS-21 58 945 werden stickstoffhaltige Harze beschrieben, die herstellbar sind, indem Polyisocyanate mit Addukten aus (Meth)acrylsäureestern und primären Polyaminen umgesetzt werden. Die DE-OS-21 58 945 enthält keinerlei Hinweise auf ein Verfahren zur Herstellung eines mehrschichtigen Überzuges des Basecoat/Clearcoat Typs.

Das in den erfindungsgemäß eingesetzten Beschichtungszusammensetzungen enthaltene Urethan- und Harnstoffgruppen enthaltende Kunstharz ist erhältlich, indem

a1) ein Diol, und

a2) ein aliphatisches und/oder cycloaliphatisches Diisocyanat

zu einem isocyanatgruppenhaltigen Präpolymeren (A) umgesetzt werden und die Isocyanatgruppen des Präpolymeren (A) anschließend zumindest zum Teil mit

a3) einem mindestens ein aktives Aminwasserstoffatom enthaltenden Addukt aus einem (Meth)acrylsäureester, vorzugsweise Acrylsäureester, und einer mindestens zwei Aminwasserstoffatome enthaltenden aliphatischen oder cycloaliphatischen Verbindung

umgesetzt werden.

Als Komponente a1) können im Prinzip alle zur Herstellung von Polyurethanlackkunstharzen geeigneten Diole eingesetzt werden. Diese Diole können niedermolekular sein; es können aber auch Diole mit höherem Molekulargewicht eingesetzt werden. Als Beispiele für niedermolekulare Diole seien Glykole wie Ethylenglykol, Propylenglykol, Diethylenglykol, Dipropylenglykol, Butandiol, Neopentylglykol und Hexandiol-1,6 genannt.

Als Beispiele für Diole mit höherem Molekulargewicht werden Polyether- und Polyesterdiole genannt.

Geeignete Polyetherdiole sind Poly(oxyalkylen)diole wie z.B. Poly(oxytetramethylen)glykol, Poly-(oxyethylen)glykol, Poly(oxypropylen)glykol usw.

Als Komponente a1) werden bevorzugt Polyesterdiole eingesetzt. Solche Polyesterdiole kann man durch Veresterung von organischen Dicarbonsäuren oder ihren Anhydriden mit organischen Diolen erhalten. Diole, die üblicherweise für die Herstellung solcher Polyester verwendet werden, schließen Alkylenglykole ein, wie Ethylenglykol, Propylenglykol, Butylenglykol, Hexylenglykol und Neopentylglykol und andere Glykole, wie hydriertes Bisphenol-A, Cyclohexandimethanol, Caprolaktondiol (z.B. das Umsetzungsprodukt von ε-Caprolakton und Ethylenglykol), hydroxyalkylierte Bisphenole, Polyetherglykole, z.B Poly-(oxytetramethylen)glykol udgl. Es können aber auch andere Diole verwendet werden.

Die Säurekomponente der Polyesterdiole besteht in der Regel aus Dicarbonsäuren oder ihren Anhydriden mit 2 bis 18 Kohlenstoffatomen pro Molekül. Beispiele für geeignete Säuren sind Phthalsäure, Isophthalsäure, Terephthalsäure, Tetrahydrophthalsäure, Hexahydrophthalsäure, Adipinsäure, Azelainsäure, Sebacinsäure, Maleinsäure, Glutarsäure, Hexachlorheptendicarbonsäure, Tetrachlorphthalsäure und andere Dicarbonsäuren verschiedenen Typs. Anstelle der Sauren können selbstverständlich auch die entsprechenden Anhydride eingesetzt werden.

Besonders bevorzugt werden Polyesterdiole als Komponente a1) eingesetzt, die als Säurekomponente Isophthalsäure enthalten und die ein mittleres Molekulargewicht (Zahlenmittel) von 400 bis 2000 aufweisen.

Als Komponente a1) konnen selbstverständlich auch Mischungen aus unterschiedlichen Diolen - z.B. Mischungen aus einem Polyesterdiol und einem niedermolekularen Diol - eingesetzt werden.

Als Komponente a2) können im Prinzip alle zur Herstellung von Polyurethanlackkunstharzen geeigneten aliphatischen und/oder cycloaliphatischen Diisocyanate eingesetzt werden. Es sind zahlreiche derartige Diisocyanate bekannt. Beispiele für geeignete Diisocyanate sind 1,4-Tetramethylendiisocyanat, Hexamethylendiisocyanat, 2,2,4-Trimethylhexan-1,6-diisocyanat, Isophorondiisocyanat, Bis(isocyanatocyclohexyl)-methan und Methylcyclohexyldiisocyanat.

Es können selbstverständlich auch Mischungen unterschiedlicher Diisocyanate eingesetzt werden.

Als Komponente a3) werden Addukte aus (Meth)acrylsäureestern und aliphatischen und/oder cycloaliphatischen Verbindungen, die mindestens zwei Aminwasserstoffatome enthalten, eingesetzt. Diese Addukte müssen zumindest ein gegenüber Isocyanatgruppen reaktives (ein sogenanntes aktives) Aminwasserstoffatom enthalten. Die Anzahl der aktiven Aminwasserstoffatome muß so gewählt werden, daß keine vernetzten Kunstharze erhalten werden. Im allgemeinen werden Addukte mit 1 bis 3 aktiven Aminwasserstoffatomen als

3

a3)-Komponente eingesetzt. Vorzugsweise werden Addukte mit zwei aktiven Aminwasserstoffatomen verwendet.

Die Herstellung der als Komponente a3) eingesetzten Addukte erfolgt auf einfache Weise durch Umsetzung einer aliphatischen und/oder cycloaliphatischen Verbindung, die mindestens zwei Aminwasserstoffe enthält, mit (Meth)acrylsäureestern. Die Additionsreaktion kann in der Schmelze oder in Lösung bei Temperaturen zwischen 20 und 120°C, vorzugsweise unter 50°C, durchgeführt werden. Die Umsetzung verläuft in den meisten Fällen exotherm. Die als Komponente a3) eingesetzten Addukte werden vorteilhafterweise hergestellt, indem die Verbindung, die mindestens zwei Aminwasserstoffe enthält, in einem geeigneten Lösungsmittel vorgelegt wird und der (Meth)acrylsäureester unter Rühren so zudosiert wird, daß die Reaktionstemperatur 50°C nicht übersteigt.

Zur Herstellung der Komponente a3) konnen sowohl Methacrylsäure- als auch Acrylsäureester verwendet werden. Bevorzugt werden Acrylsäureester eingesetzt. Beispiele für verwendbare (Meth)acrylsäureester sind Ethyl(meth)acrylat, Methyl(meth)acrylat, Propyl(meth)acrylat, Butyl(meth)acrylat und 2-Ethylhexyl-(meth)acrylat.

Vorteilhafterweise werden hydroxylgruppenhaltige (Meth)acrylsäureester, insbesondere hydroxylgruppenhaltige Alkyl(meth)acrylate eingesetzt. Ganz besonders bevorzugt werden hydroxylgruppenhaltige Alkyl-(meth)acrylate eingesetzt, deren Alkoholkomponente mindestens 4 Kohlenstoffatome aufweist. Als Beispiele für einsetzbare hydroxylgruppenhaltige Alkyl(meth)acrylate werden 2-Hydroxyethyl(meth)acrylat, 2 Hydroxypropyl(meth)acrylat und 4-Hydroxybutyl(meth)acrylat sowie insbesondere ein Umsetzungsprodukt aus einem Mol Hydroxyalkyl(meth)acrylat, vorzugsweise Hydroxyalkylacrylat, insbesondere Hydroxyethylacrylat und 1 bis 3, vorzugsweise 2-Mol -Caprolakton.

Die Komponente a3) wird hergestellt, indem die oben beschriebenen (Meth)acrylsäureester mit einer Verbindung, die mindestens zwei Aminwasserstoffatome enthält, umgesetzt werden. Dabei müssen die Reaktionsbedingungen sowie Art und Menge der Verbindung, die mindestens zwei Aminwasserstoffatome enthält, so gewählt werden, daß das entstehende Addukt mindestens 1, vorzugsweise 1 bis 3 aktive Aminwasserstoffatome enthält.

Als Verbindungen, die mindestens zwei Aminwasserstoffe enthalten, können z.B. Ethylendiamin, 1,2- oder 1,3-Propylendiamin, 1,6-Hexandiamin, 2-Methyl-1,6-hexandiamin, 1-Methyl-2,4-diamino-cyclohexan, 1-Amino-3-aminomethyl-3,5,5-trimethylcyclohexan, 1,3- oder 1,4-Bisaminomethylcyclohexan oder 4,4′-Diaminodicyclohexylmethan eingesetzt werden. Bevorzugt werden Verbindungen eingesetzt, die primäre Aminogruppen enthalten.

Das in den erfindungsgemäß eingesetzten Beschichtungszusammensetzungen enthaltene Urethan- und Harnstoffgruppen enthaltende Kunstharz wird vorteilhafterweise hergestellt, indem zunächst einmal die Komponenten a1) und a2) zu einem isocyanatgruppenhaltigen Präpolymeren (A) umgesetzt werden. Diese Umsetzung kann nach den gut bekannten Methoden der Polyurethanchemie durchgeführt werden. Die Komponenten a1) und a2) werden vorzugsweise in einem inerten organischen Lösungsmittel (z.B. Toluol, Xylol, Ethyl- oder Butylacetat) umgesetzt. Weiter werden die Komponenten a1) und a2) vorzugsweise in solchen Mengen umgesetzt, daß das Molverhältnis von a1) zu a2) 0,5:1,0 bis 0,9:1,0 beträgt.

In einem getrennten Reaktionsgefäß wird das Addukt a3) auf die oben beschriebene Art und Weise hergestellt. Die Fertigstellung des erfindungsgemäßen Kunstharzes kann dann durch langsame Zugabe des Präpolymeren (A) zu dem Addukt a3) erfolgen. Dabei werden die Mengenverhältnisse Präpolymer (A) zu Komponente a3) vorzugsweise so gewählt, daß auf eine Isocyanatgruppe 1 bis 2 aktive Aminwasserstoffatome kommen.

Aus dem oben beschriebenen Urethan- und Harnstoffgruppen enthaltenden Kunstharz kann nach allgemein bekannten Methoden eine Beschichtungszusammensetzung hergestellt werden, die als Basisbeschichtungszusammensetzung in einem Verfahren zur Herstellung von mehrschichtigen, schützenden und/oder dekorativen Überzügen des Basecoat/Clearcoat Typs eingesetzt werden kann. Die erfindungsgemäß eingesetzten Beschichtungszusammensetzungen enthalten neben dem Urethan- und Harnstoffgruppen enthaltenden Kunstharz übliche organische Verdünnungsmittel, ggf. weitere Kunstharze, Pigmente und sonstige allgemein gebräuchliche Zusatzstoffe.

Die in den erfindungsgemäß eingesetzten Beschichtungszusammensetzungen enthaltenen organischen Verdünnungsmittel können aus üblicherweise als Polymerlösungs- bzw. Polymerdispergiermittel in Beschichtungszusammensetzungen eingesetzten flüchtigen organischen Flüssigkeiten bzw. Gemischen von Flüssigkeiten bestehen.

Als Beispiele seien genannt: Aliphatische Kohlenwasserstoffe, beispielsweise Hexan und Heptan, aromatische Kohlenwasserstoffe, wie z.B. Toluol und Xylol, und Erdölfraktionen mit verschiedenen Siedepunktsbereichen, die überwiegend aliphatisch sind, aber einen wesentlichen aromatischen Gehalt aufweisen, Ester, beispielsweise Butylacetat, Ethylenglycoldiacetat und 2-Ethoxyethylacetat, Ketone, beispielsweise Aceton und Methylisobutylketon, und Alkohole, beispielsweise Butylalkohol.

Als Beispiel für Kunstharze, die neben dem erfindungsgemäßen Kunstharz in den erfindungsgemäß eingesetzten Beschichtungszusammensetzungen enthalten sein können, werden die in der EP-A-137 256 beschriebenen Polyester genannt. Bei diesen Polyestern handelt es sich um Polyester, die hergestellt werden aus

b$_1$) aromatischen und aliphatischen und/oder cycloaliphatischen Polycarbonsäuren, wobei 40 bis 70 Mol-% der Polycarbonsäuren aromatische und 60 bis 30 Mol-% aliphatische und/oder cycloaliphatische Polycarbonsäuren sind und 0 bis 50 Mol-% der gesamten Polycarbonsäuren Tricarbonsäuren sind und

b$_2$) Polyolen, wobei

20 bis 60 Mol-% der Polyole 2 oder 3 Kohlenstoffatome aufweisen und 40 bis 80 Mol-% 4 oder mehr Kohlenstoffatome aufweisen, mindestens 40 Mol-% der eingesetzten Diole aliphatische Seitenketten aufweisen, 0 bis 50 Mol-% der Polyole Triole sind und das Verhältnis der Komponenten b$_1$ und b$_2$ der folgenden Formel entspricht

$$K = \frac{n_1 - n_2(F - 2)}{n_2}$$

in der n$_1$ die Molzahl der Polyole, n$_2$ die Molzahl der Polycarbonsäuren und F den molaren Mittelwert der Funktionalität der Polycarbonsäuren bedeuten und K einen Wert von 1,05 bis 1,5 aufweist.

Geeignete Polycarbonsäuren zur Herstellung der Polyester sind z. B. Phthalsäure, Isophthalsäure, Terephthalsäure, Hexahydrophthalsäure, Adipinsäure, Azelainsäure, Sebacinsäure oder Trimellithsäure. Als Polyole können Ethylenglykol, Propylenglykol, Diethylenglykol oder Dipropylenglykol eingesetzt werden. Neben diesen werden als Triole Glycerin, Trimethylolethan, Trimethylolpropan oder ähnliche Verbindungen verwendet.

Die erfindungsgemäß eingesetzten Beschichtungszusammensetzungen enthalten vorteilhafterweise ein Vernetzungsmittel. Als Vernetzungsmittel können z.B. Aminoplastharze, Phenolharze oder blockierte Polyisocyanate eingesetzt werden. Bevorzugt werden Aminoplastharze wie Kondensationsprodukte aus Formaldehyd mit Melamin, Harnstoff oder Benzoguanamin eingesetzt. Diese Aminoplastharze enthalten häufig Methylol-oder ähnliche Alkylolgruppen, die vorzugsweise zumindest teilweise mit einem Alkohol verethert sind.

Die erfindungsgemäß eingesetzten Beschichtungszusammensetzungen enthalten - bezogen auf den Bindemittelfestkörper - vorzugsweise 40 bis 80 Gew.-%, besonders bevorzugt 55 bis 65 Gew.-%, des erfindungsgemäß eingesetzten Urethan- und Harnstoffgruppen enthaltenden Kunstharzes.

Die erfindungsgemäß eingesetzten Beschichtungszusammensetzungen können alle Pigmente, die für Basecoat/Clearcoat-Lackierung geeignet sind, enthalten. Besonders bevorzugt werden Beschichtungszusammensetzungen, die Metallplättchenpigmente, vorzugsweise Aluminiumplättchen, einzeln oder im Gemisch enthalten, eingesetzt. Die bevorzugt eingesetzten Beschichtungszusammensetzungen können neben dem Metallplättchenpigment noch weitere farbgebende, nichtmetallische Pigmente enthalten.

Die erfindungsgemäß eingesetzten Beschichtungszusammensetzungen können auch weitere übliche Zusätze wie Füllstoffe, Weichmacher, Stabilisatoren, Netzmittel, Dispergierhilfsmittel, Verlaufmittel, Entschäumer und Katalysatoren einzeln oder im Gemisch in den üblichen Mengen enthalten.

Zur weiteren Verbesserung des Metalleffekts können den erfindungsgemäß eingesetzten Beschichtungszusammensetzungen auch noch vernetzte Polymermikroteilchen und/oder ein Copolymerisat, das aus 85 bis 95 Gew.-% Ethylen und 15 bis 5 Gew.-% Vinylacetat hergestellt worden ist, zugesetzt werden. Geeignete Polymermikroteilchen sind z.B. in der EP 29637 beschrieben. Bei diesen Polymermikroteilchen handelt es sich um Polymermikroteilchen mit einer Größe oder einer Größenverteilung im Bereich von 0,05 bis 10 µm, die hergestellt worden sind durch Emulsionspolymerisation einer Mischung von ungesättigten Monomeren, von denen vorzugsweise ein Teil Carboxyl- oder Hydroxylgruppen enthält und ein Teil frei von Carboxyl- und Hydroxylgruppen ist und eines polyfunktionellen Vernetzers, wobei die Emulsionspolymerisation in wäßriger Phase durchgeführt worden ist und während oder nach der Polymeristion das Wasser entfernt worden ist.

Derartige polymere Mikroteilchen sowie die Herstellung sogenannter Mikrogele sind beispielsweise in der EP 0 029 637 A2 beschrieben.

Als ungsättigte Monomere zur Herstellung der Mikroteilchen kommen beispielsweise einerseits Acrylsäure, Methacrylsäure, Hydroxyethylacrylat, Hydroxypropylacrylat, Hydroxyethylmethacrylat oder Hydrox-

EP 0 302 296 B1

ypropylmethacrylat und andererseits Alkylester der Acrylsäure und Methacrylsäure mit vorzugsweise 1 bis 4 Kohlenstoffatomen im Alkylrest sowie Styrol und α-Methylstyrol in Betracht.

Als polyfunktionelle Vernetzer sind Verbindungen mit zwei ethylenisch ungesättigten Doppelbindungen geeignet, die zu vernetzten, in der Überzugsmasse unlöslichen Mikroteilchen führen. Beispiele hierfür sind: Ethylenglykoldimethacrylat, Tetraethylenglykoldimethacrylat, Methylenbisacrylamid, Methylenbismethacrylamid, Divinylbenzol,Vinylmethacrylat, Vinylcrotonat, Vinylacrylat, Divinylacetylen, Trivinylbenzol, Glycerintrimethacrylat, Pentaerytritholtetramethacrylat, Triallylcyanorat, Divinylethan, und ähnliche Verbindungen, wie sie in der EP 0 029 637 beschrieben sind.

Als Deckschichtzusammensetzungen sind grundsätzlich alle bekannten nicht oder nur transparent pigmentierten Beschichtungszusammensetzungen geeignet. Hierbei kann es sich um konventionelle lösungsmittelhaltige Klarlacke, wasserverdünnbare Klarlacke oder Pulverklarlacke handeln.

Als zu beschichtende Substrate kommen vor allem vorbehandelte Metallsubstrate in Frage, es können aber auch nichtvorbehandelte Metalle und beliebige andere Substrate, wie z.B. Holz und Kunststoff, nach dem erfindungsgemäßen Verfahren mit einer Basecoat/Clearcoat-Beschichtung überzogen werden.

Die Erfindung betrifft auch ein Substrat, das nach dem oben beschriebenen Verfahren beschichtet worden ist.

Die Erfindung wird in den folgenden Beispielen näher erläutert. Alle Angaben über Teile und Prozentsätze sind Gewichtsangaben, falls nicht ausdrücklich etwas anderes festgestellt wird.

1. Herstellung einer Verbindung, die zwei gegenüber Isocyanatgruppen reaktive Hydroxylgruppen trägt - (Komponente a1)

In einem 6-Liter-Vierhalskolben mit Rührer, Thermometer, Füllkörperkolonne mit Kopfthermometer, Destillationsbrücke, absteigendem Kühler und Kondensatvorlage werden 1682 g 2,2-Dimethylpropandiol-1,3, 472 g Adipinsäure, 479 g Phthalsäureanhydrid und 1074 g Isophthalsäure eingewogen. Das Reaktionsgemisch wird unter Rühren zunächst auf 160°C aufgeheizt. Nach Beginn der Wasserabspaltung wird die Temperatur so geführt, daß die Kolonnenkopftemperatur 100°C nicht übersteigt. Es wird bei max. 230°C weiter verestert, bis die Säurezahl 5 beträgt. Es resultiert ein Polyester mit einer OH-Zahl von 118. Der Polyester wird 80%ig in Butylacetat gelöst.

2. Herstellung eines isocyanatgruppenhaltigen Präpolymeren (A)

In einem Vierhalskolben mit Rührer, Thermometer und Rückflußkühler werden 1580 g der nach der unter Pkt. 1 aufgeführten Vorschrift hergestellten Polyesterlösung zusammen mit 17 g 2,2-Dimethylpropandiol-1,3, 60 g Diethylenglykol und 72 g Butylacetat eingewogen und auf 60°C aufgeheizt. Danach werden innerhalb von 10 Minuten 859 g 4,4-Dicyclohexylmethandiisocyanat zugegeben. Nachdem das Reaktionsgemisch homogen geworden ist, werden 0,8 g Dibutylzinndilaurat hinzugefügt. Nun wird die Temperatur auf 100°C gesteigert und 3 Stunden gehalten. Es wird ein Präpolymer mit einem NCO-Gehalt von 3,75 % erhalten.

3. Herstellung von Acrylsäurester-Aminaddukten (Komponente a3)

3.1 In einem kühlbaren 2-Liter-Rührgefäß, das mit einem Rückflußkühler, einem Thermometer und einem Zulaufgefäß ausgerüstet ist, werden 476 g 4,4'-Diamino-3,3-dimethyldicyclohexylmethan (Laromin® C 260 der BASF AG) vorgelegt. Durch das Zulaufgefäß werden unter Rühren innerhalb von 3 Stunden 562 g 4-Hydroxibutylacrylat zudosiert. Dabei wird durch Kühlen die Reaktionstemperatur unter 50°C gehalten. Nach der Zugabe wird noch bei Raumtemperatur gerührt. Man erhält eine schwach gelbliche klare viskose Flüssigkeit.

3.2 In der unter Pkt. 3.1 beschriebenen Apparatur werden 357 g 4,4'-Diamino-3,3'-dimethyldicyclohexylmethan (Laromin® C 260 der BASF AG) vorgelegt. Über das Zulaufgefäß werden dann unter Rühren innerhalb von 3,5 Stunden 903 g eines Umsetzungsproduktes aus einem Mol Hydroxyethylacrylat mit zwei Molen ε-Caprolacton (Tone® M-100 der UCC) zugetropft. Die Reaktionstemperatur wird durch Kühlen unter 50°C gehalten. Nach der Zugabe wird nach 3 Stunden bei Raumtemperatur gerührt. Es wird eine schwach gelbliche, viskose Flüssigkeit mit einer Aminzahl von 131 erhalten.

3.3 Es wird wie unter Pkt. 3.2 beschrieben verfahren. Statt 903 g Tone® M-100 werden jetzt 516 g Tone® M-100 eingesetzt. Das Reaktionsprodukt weist eine Aminzahl von 191 auf.

4. Herstellung von erfindungsgemäßen Urethan- und Harnstoffgruppen enthaltenden Kunstharzen

4.1 In einem Rührgefäß wird eine Mischung aus 392 g des Adduktes gemäß Pkt. 3.1, 2077 g Butylacetat und 744 g n-Butanol hergestellt. Zu dieser Mischung werden innerhalb von 20 Minuten unter Rühren 1040 g des Präpolymeren gemäß Pkt. 2 zugegeben. Es wird eine nahezu farblose Lösung mit einem Festkörpergehalt von 30 Gew.-% und einer Viskosität von 3,4 dPas erhalten.

4.2 In einem Rührgefäß wird eine Mischung aus 189 g des Adduktes gemäß Pkt. 3.3, 1010 g Butylacetat und 362 g n-Butanol hergestellt. Zu dieser Mischung werden innerhalb von 20 Minuten unter Rühren 507 g des Präpolymeren gemäß Pkt. 2 zugegeben. Es wird eine nahezu farblose

6

Lösung mit einem Festkörpergehalt von 30 Gew.-% und einer Viskosität von 4,0 dPas erhalten.

4.3 In einem Rührgefäß wird eine Mischung aus 343 g des Adduktes gemäß Pkt. 3.2, 1304 g Butylacetat und 521 g n-Butanol hergestellt. Zu dieser Mischung werden innerhalb von 20 Minuten unter Rühren 648 g des Präpolymeren gemäß Pkt. 2 zugegeben. Es wird eine klare, farblose Lösung mit einem Festkörpergehalt von 30 % und einer Viskosität von 3 dPas erhalten.

5. Herstellung erfindungsgemäß eingesetzter Basisbeschichtungszusammensetzungen

23 Teile der in Beispiel D der EP-A-137 256 beschriebenen Copolymerdispersion (vgl.5.1.) werden mit 47 Teilen der gemäß Pkt. 4.1 bzw. Pkt. 4.2 bzw. Pkt. 4.3 hergestellten Kunstharzlösung und mit 13 Teilen eines mit Butanol veretherten Melaminharzes (Maprenal® MF 650 der Hoechst AG) zu einer homogenen Mischung vermengt. Anschließend werden 5,5 Teile einer mit 11,5 Teilen Butylacetat angeteigten Aluminiumplättchenpigmentpaste (65%ig in aliphatischen Kohlenwasserstoffen) in die oben beschriebene Mischung inkorporiert. Die so erhaltene Mischung wird mit einem Gemisch aus 50 Teilen Butylacetat, 25 Teilen Butylglycolacetat und 25 Teilen n-Butanol auf eine Spritzviskosität von 24 Sekunden (ISO 4) eingestellt. Der Festkörpergehalt der Basisbeschichtungszusammensetzungen beträgt 20 Gew.-%.

5.1. In einem beheizbaren Mischer mit Schnellrührer werden eingewogen: 200 g Xylol und 100 g eines Ethylenvinylacetat-Copolymer mit einem Vinylacetatgehalt von 12 % und auf 100°C aufgeheizt und bis zur homogenen Lösung gerührt. Dann wird auf 80°C abgekühlt und die Lösung mit 700 g eines Gemisches aus Xylol und Butylacetat ausgefällt, die Temperatur sinkt dabei auf 50°C. Es resultiert eine 10%ige Dispersion des Copolymers.

6. Zur Herstellung der Zweischichtlackierungen des Basecoat/Clearcoat-Typs verwendete Klarlacke

6.1 Serienklarlack

Als Serienklarlack wurde der in den Patentbeispielen K1 und K2 der EP-A 137 256 beschriebene Klarlack verwendet. Die Patentbeispiele K1 und K2 der EP-A-137 256 lauten wie folgt:

Beispiel K1, Klarlack-Acrylat

In ein 3 l-Reaktionsgefäß mit Thermometer, Rührer, elektrischer Widerstandsheizung, Rückflußkühler und Zulaufgefäß werden 941 g eines Aromatengemisches mit einem Siedebereich von 156 - 170°C eingewogen und unter Rühren auf 140°C erhitzt. Es wird ein Gemisch aus 223 g Styrol, 223 g Methylmethacrylat, 208 g Butandiol-1,4-monoacrylat, 30 g Acrylsäure, 803 g n-Butylacrylat und 18 g Di-tert.-Butylperoxid innerhalb von 3 Stunden gleichmäßig aus dem Zulaufgefäß in das Reaktionsgefäß dosiert und die Temperatur bei 140°C gehalten.

Das Reaktionsgemisch wird weitere 30 Minuten bei 140°C gehalten und dann wird eine Lösung von 4 g Di-tert.-Butylperoxid in 50 g der Aromatenmischung mit dem Siedebereich zwischen 156 und 172°C zugegeben.

Nach weiteren 2 Stunden bei 140°C resultiert eine Acrylatharzlösung mit einem Festkörpergehalt von 60 %. Das Acrylatharz hat eine Säurezahl von 14, eine OH-Zahl von 109 und eine Viskosität von 250 mPas (gemessen als 50%ige Lösung in Xylol mit dem ICI-Viskosimeter).

Beispiel K2, Klarlack

Zu 550 g der im Beispiel K1 beschriebenen 60%igen Acrylatharzlösung werden 300 g der im Beispiel C beschriebenen Lösung des Melamin-Formaldehyd-Harzes, 150 g Xylol und 50 g Butylglykolacetat unter Rühren zugegeben und sorgfältig gemischt. Es resultiert ein Klarlack mit einem Festgehalt von 46,5 %.

6.2 Reparatur-Klarlack

Es wird die Zusammensetzung übernommen, wie sie in Beispiel K2 der EP-A-137 256 beschrieben wird, jedoch mit dem Unterschied, daß anstatt des Melaminharzes 163 g eines über Biuretgruppen trimerisiertes Hexamethylendiisocyanat, wie es von der Firma Bayer AG unter dem Handelsnamen DESMODUR® N verkauft wird, eingesetzt werden. Der Festkörpergehalt beträgt 49,5 %. Dieser 2-Komponenten-Klarlack ist nur begrenzt lagerfähig und sollte alsbald nach der Herstellung verarbeitet werden.

7. Herstellung von Zweischichtlackierungen des Basecoat/Clearcoat-Typs

7.1 Die gemäß Pkt. 5 hergestellten Basisbeschichtungszusammensetzungen werden mit einer Fließbecherpistole so auf mit einer üblichen Grundierung und einer Füllerschicht lackierte Karosseriebleche gespritzt, daß eine Trockenfilmdicke der Basislacke von 12 bis 17 $\mu$m resultiert. Die aufgespritzten Basislacke werden nach 5 Minuten Ablüftzeit mit dem Serienklarlack bzw. Reparaturklarlack so überlackiert, daß eine Trockenfilmdicke des Klarlackes von 35 bis 45 $\mu$m resultiert. Nach einer Ablüftzeit von 20 Minuten werden die mit Serienklarlack hergestellten Lackierungen 20 Minuten bei 140°C und die mit Reparaturklarlack hergestellten Lackierungen 20 Minuten bei 80°C eingebrannt.

7.2 (Vergleichsbeispiel)

EP 0 302 296 B1

Es wird wie unter Pkt. 7.1 beschrieben verfahren; als Basisbeschichtungszusammensetzung wird aber die in Beispiel 3 der EP-A-137 256 offenbarte Beschichtungszusammensetzung eingesetzt, die wie folgt hergestellt wird:

7.2.1. Herstellung eines Urethan- und Harnstoffgruppen enthaltenden Kunstharzes (Beispiel A3 der EP-A-137 256)

In einem Vierhalskolben mit Rührer, Thermometer und Rückflußkühler werden 1500 g eines Polyesters aus Hexandiol 1,6,Neopentylglykol und Adipinsäure mit einer OH-Zahl von 75 im Vakuum entwässert. Nach Zugabe von 2200 g Butylacetat werden zunächst 393 g 4,4'-Dicyclohexylmethandiisocyanat zugegeben, nach ca. 5 Minuten erfolgt die Zugabe von 0,3 g Dibutylzinndilaurat. Nach einer Reaktionszeit von 2 h bei 100°C beträgt der NCO-Gehalt der Lösung 0,98 %.

In einem Verdünnungsgefäß wird eine Mischung aus 2280 g Butylacetat, 1490 g Butanol und 98 g 1-Amino-3-aminomethyl-cyclohexan vorgelegt. Das NCO-Gruppen enthaltende Vorprodukt wird unter Rühren innerhalb von 15 - 20 Minuten zugegeben. Man erhält eine schwach gelbliche viskose Lösung mit einem Feststoffgehalt von 25 %.

7.2.2. Herstellung eines Polyesters (Beispiel B3 der EP-A-137 256)

In einem 2 l-Vierhalskolben mit Rührer, elektrischer Widerstandsheizung, Thermometer, Füllkörperkolonne gefüllt mit Pall-Ringen, ausgestattet mit Kopfthermometer, Destillationsbrücke, Kondensatkühler und Vorlage werden eingewogen: 113,4 g Ethandiol-1,2, 142,6 g 2,2-Dimethylpropandiol-1,3, 279,8 g Hydroxipivalinsäureneopentylglykolester, 91,9 g 1,1,1-Trimethylolpropan, 303,5 g Isophthalsäure, 208,5 g Hexahydrophthalsäureanhydrid, 200,2 g Adipinsäure, 30 g Xylol, 2 g Dibutylzinnoxid. Das Reaktionsgemisch wird unter Rühren schnell auf 160°C erhitzt. Von 160°C wird die Temperatur innerhalb 5 Stunden auf 220°C so gesteigert, daß die Kolonnen-Kopftemperatur 103°C nicht übersteigt. Es wird bei 220°C gehalten und weiterverestert, bis eine Säurezahl (nach DIN) von 5 erreicht ist. Dann wird auf 140°C abgekühlt und der Polyester in 800 g einer Mischung aus Xylol und Ethylglykolacetat im Verhältnis 1 : 1 angelöst unter weiterem Kühlen. Es resultiert eine 60%ige Lösung eines Polyesters mit einem Molekulargewicht von 1520 und einer OH-Zahl von 100, bezogen auf den festen Polyester.

7.2.3. Herstellung eines Melaminharzes (Beispiel C der EP-A-137 256)

In einen 2 l-Vierhalskolben mit elektrischer Widerstandsheizung, Rührer, Thermometer und Dastillationsapparatur für die Kreisfahrweise mit Wasserabscheider werden eingewogen: 560 g Isobutanol, 250 g 37%ige wäßrige Formaldehydlösung, 30 g Toluol und 0,05 g 85%ige Phosphorsäure. Das Reaktionsgemisch wird bis 40°C aufgeheizt und es werden 95,3 g Melamin zugegeben. Es wird auf 85°C aufgeheizt und die Temperatur langsam auf 100°C gesteigert, so daß das Reaktionsgemisch dabei zügig destilliert, es wird dabei Wasser ausgekreist. Es wird bei 100°C gehalten, bis eine Benzinverträglichkeit von 1/5 mit einem Benzin des Siedebereichs von 135 - 180°C erreicht wird. Dann wird der Rücklauf der Destillationsanlage geschlossen und 300 g Lösungsmittel abdestilliert; dabei steigt die Temperatur auf 115°C an. Dann wird auf 80°C abgekühlt und das Reaktionsgemisch mit 65 g Isobutanol verdünnt. Es resultiert die Lösung eines Melaminharzes mit einem Festkörper (60 Min. 100°C) von 55 % und einer Viskosität von 250 sec (DIN 53 211).

7.2.4. Herstellung der Basisbeschichtungszusammensetzung

Die nach 7.2.1 hergestellte Kunstharzlösung wird mit der nach 7.2.2. hergestellten Polyesterlösung, dem gemäß 7.2.3. hergestellten Melamin-Formaldehydharz und der gemäß 5.1. hergestellten Copolymerdispersion in einem Rührgefäß so unter Rühren gemischt, daß eine homogene Mischung entsteht, die, bezogen auf 100 Gew.-Teile Festsubstanz, 45 Gew.-Teile des nach 7.2.1. hergestellten Kunstharzes, 25 Gew.-Teile des nach 7.2.2. hergestellten Polyesters, 12 Gew.-Teile des nach 7.2.3 hergestellten Melamin-Formaldehydharzes und 6 Gew.-Teile des Copolymers gemäß 5.1. enthält. Dann werden 12 Gew.-Teile einer "non-leafing" Aluminiumbronze, 65%ig in aliphatischen Kohlenwasserstoffen mit der 1,5-fachen Menge, bezogen auf die feste Aluminiumbronze an Butylacetat, sorgfältig angeteigt und unter Rühren zu der vorher beschriebenen Mischung aus Polyurethan/Polyharnstoff-Elastomerlösung, Polyester, Melamin-Formaldehyd-Lösung und Copolymerdispersion gegeben und verteilt. Die so entstandene Mischung wird mit einem Gemisch aus 50 Gew.-Teilen Butylacetat, 25 Gew.-Teilen Butylglykolacetat und 25 Gew.-Teilen Butanol auf einen Festkörper von 25 Gew.-% eingestellt.

8. Beurteilung der gemäß Pkt. 7 hergestellten Zweischichtlackierungen

8.1 Zur Beurteilung der gemäß Pkt. 7 hergestellten Zweischichtlackierungen wird der Metalleffekt der Lackierungen auf folgende Art und Weise gemessen und berechnet:

Gerät: Goniophotometer GP2 (Firma CARL ZEISS)

Die Messung der Helligkeit in der Aufsicht und in der Schrägsicht erfolgt gegenüber einem geeichten Standard.
Messung der Helligkeit in der Aufsicht (HA):
  Einstrahlwinkel:            -45°, Apertur 0,25°
  Beobachtungswinkel:      38°, Apertur 0,25°
Messung der Helligkeit in der Schrägsicht (HS):
  Einstrahlwinkel:            -70°, Apertur 1°
  Beobachtungswinkel:      0° Apertur 2°

$$HA = \frac{AWp \cdot 62}{AWs}$$

$$HS = \frac{AWp \cdot 50}{AWs}$$

AWp =      Anzeigenwert der Probe
AWS =      Anzeigenwert des Standards
Ein ausgeprägter Metallic-Effekt liegt dann vor, wenn der HA-Wert hoch und der HS-Wert niedrig liegt. Eine Maßzahl für den Metallic-Effekt erhält man nach folgender Formel:

$$ME = \frac{HA}{HS} \cdot 100$$

8.2 Meßergebnisse

| | Serien-klarlack | Reparatur-klarlack |
|---|---|---|
| Basisbeschichtungszusammensetzung 1 | 113* | 117* |
| Basisbeschichtungszusammensetzung 2 | 129* | 125* |
| Basisbeschichtungszusämmensetzung 3 | 113* | 117* |
| Vergleichsbeispiel | 78* | 53* |

Die Unterschiede zwischen Serien- und Reparaturlackierung sind bei Verwendung der erfindungsgemäßen Basisbeschichtungszusammensetzungen deutlich geringer als bei Verwendung von Basisbeschichtungszusammensetzungen gemäß EP-A-137 256.

* Gemäß Pkt. 8.1 ermittelte ME-Werte.

**Patentansprüche**

1. Verfahren zur Herstellung eines mehrschichtigen, schützenden und/oder dekorativen Überzuges auf einer Substratoberfläche, bei welchem
   (1) als Basisbeschichtungszusammensetzung eine Beschichtungszusammensetzung aufgebracht wird, die organische Verdünnungsmittel, mindestens ein Urethan- und Harnstoffgruppen enthaltendes Kunstharz, Pigmente, ggf. weitere Kunstharze und sonstige allgemein übliche Zusatzstoffe enthält,

(2) aus der in Stufe (1) aufgebrachten Beschichtungszusammensetzung ein Polymerfilm auf der Substratoberfläche gebildet wird,

(3) auf der so erhaltenen Basisschicht eine geeignete transparente Deckschichtzusammensetzung aufgebracht wird und anschließend

(4) die Basisschicht zusammen mit der Deckschicht eingebrannt wird,

dadurch gekennzeichnet, daß die Basisbeschichtungszusammensetzung mindestens ein Urethan- und Harnstoffgruppen enthaltendes Kunstharz enthält, das erhältlich ist, indem

a1) ein Diol und

a2) ein aliphatisches und/oder cycloaliphatisches Diisocyanat

zu einem isocyanatgruppenhaltigen Präpolymeren (A) umgesetzt werden und die Isocyanatgruppen des Präpolymeren (A) anschließend zumindest zum Teil mit

a3) einem mindestens ein aktives Aminwasserstoffatom enthaltenden Addukt aus einem (Meth)-acrylsäureester, vorzugsweise Acrylsäureester, und einer mindestens zwei Aminwasserstoffatome enthaltenden aliphatischen oder cycloaliphatischen Verbindung umgesetzt werden.

2. Verfahren nach Anspruch 1, dadurch gekennzeichnet, daß als Komponente a1) ein unter Verwendung von Isophthalsäure hergestelltes Polyesterdiol mit einem mittleren Molekulargewicht (Zahlenmittel) von 400 bis 2000 eingesetzt wird.

3. Verfahren nach Anspruch 1 oder 2, dadurch gekennzeichnet, daß die Komponenten a1) und a2) in einem Molverhältnis von 0,5 : 1,0 bis 0,9 : 1,0 eingesetzt werden.

4. Verfahren nach einem der Ansprüche 1 bis 3, dadurch gekennzeichnet, daß das als Komponente a3) eingesetzte Addukt im Mittel etwa zwei aktive Aminwasserstoffatome pro Molekül enthält.

5. Verfahren nach einem der Ansprüche 1 bis 4, dadurch gekennzeichnet, daß die Basisbeschichtungszusammensetzung Metallplättchenpigmente enthält.

6. Substrat, beschichtet mit einem mehrschichtigen schützenden und/oder dekorativen Überzug, dadurch gekennzeichnet, daß es nach dem Verfahren gemäß Anspruch 1 hergestellt worden ist.

7. Verwendung von Kunstharzen, die erhältlich sind, indem

a1) ein Diol und

a2) ein aliphatisches und/oder cycloaliphatisches Diisocyanat

zu einem isocyanatgruppenhaltigen Präpolymeren (A) umgesetzt werden und die Isocyanatgruppen des Präpolymeren (A) anschließend zumindest zum Teil mit

a3) einem mindestens ein aktives Aminwasserstoffatom enthaltenden Addukt aus einem (Meth)-acrylsäureester, vorzugsweise Acrylsäureester, und einer mindestens zwei Aminwasserstoffatome enthaltenden aliphatischen oder cycloaliphatischen Verbindung

umgesetzt werden als Bindemittel in Beschichtungszusammensetzungen, die zur Herstellung der Basisschicht von Zweischichtlackierungen des Basecoat/Clearcoat Typs geeignet sind.

**Claims**

1. A process for the preparation of a multicoat protective and/or decorative coating on a substrate surface in which

(1) a coating composition which comprises organic diluents, at least one resin containing urethane and urea groups, pigments and, where appropriate, other resins and other conventional additives in common use, is applied as basecoat composition,

(2) a polymeric film forms on the substrate surface from the coating composition applied in stage (1),

(3) a suitable transparent topcoat composition is applied to the basecoat obtained in this manner, and subsequently

(4) the basecoat and the topcoat are stoved together,

characterised in that the basecoat composition comprises at least one resin containing urethane and urea groups, the resin being obtainable by reacting

a1) a diol with

a2) an aliphatic and/or cycloaliphatic diisocyanate

to form a prepolymer (A) containing isocyanate groups, and by subsequently reacting the isocyanate groups of prepolymer (A), at least in part, with

a3) an adduct produced from a (meth)acrylic ester, preferably an acrylic ester, and an aliphatic or cycloaliphatic compound containing at least two aminic hydrogen atoms, the adduct containing at least one active aminic hydrogen atom.

2. A process according to Claim 1, characterised in that a polyester diol, prepared from isophthalic acid, having an average molecular weight (number average) of 400 to 2,000, is used as the component a1).

3. A process according to Claim 1, characterised in that the components a1) and a2) are used in a molar ratio of 0.5:1.0 to 0.9:1.0.

4. A process according to one of Claims 1 to 3, characterised in that the adduct used as component a3) contains in the centre about two active aminic hydrogen atoms per molecule.

5. A process according to one of Claims 1 to 4 characterised in that the basecoat compositions contain metallic platelet pigments.

6. A substrate, coated with a multicoat protective and/or decorative coating, which has been prepared by the process of Claim 1.

7. The use of resins, obtainable by reacting

a1) a diol with

a2) an aliphatic and/or cycloaliphatic diisocyanate

to form a prepolymer (A) containing isocyanate groups, and by subsequently reacting the isocyanate groups of the prepolymer (A), at least in part, with

a3) an adduct produced from a (meth)acrylic ester, preferably an acrylic ester, and an aliphatic or a cycloaliphatic compound containing at least two aminic hydrogen atoms, the adduct containing at least one active aminic hydrogen atom,

as binders in coating compositions which are suitable for the preparation of the basecoat for two-coatings of the basecoat/clearcoat type.

**Revendications**

1. Procédé de fabrication d'un revêtement à plusieurs couches, protecteur et/ou décoratif, sur une surface de substrat, suivant lequel :

(1) on applique, comme composition de revêtement de base, une composition de revêtement qui contient des diluants organiques, au moins une résine synthétique contenant des groupes uréthanne et urée, des pigments, le cas échéant d'autres résines synthétiques et les autres additifs généralement usuels ;

(2) à partir de la composition de revêtement appliquée à l'étape (1), on forme un film de polymère sur la surface d'un substrat ;

(3) sur la couche de base ainsi obtenue, on applique une composition de couche de recouvrement transparente appropriée, puis

(4) on soumet la couche de base à une cuisson, conjointement avec la couche de recouvrement,

caractérisé par le fait que la composition de revêtement de base contient au moins une résine synthétique contenant des groupes uréthanne et urée, qui peut être obtenue en faisant réagir

(a1) un diol, et

(a2) un diisocyanate aliphatique et/ou cycloaliphatique

pour obtenir un prépolymère (A) contenant des groupes isocyanate, puis en faisant réagir les groupes isocyanate du prépolymère (A) au moins en partie avec

(a3) un produit d'addition contenant au moins un hydrogène d'amine actif, et obtenu à partir d'un ester d'acide (méth)acrylique, de préférence, un ester de l'acide acrylique, et d'un composé aliphatique ou cycloaliphatique contenant au moins deux atomes d'hydrogène d'amine.

2. Procédé selon la revendication 1, caractérisé par le fait que, comme composant (a1), on utilise un polyester diol obtenu avec utilisation d'acide isophtalique, et présentant une masse moléculaire moyenne (moyenne en nombre) de 400 à 2000.

3. Procédé selon l'une des revendications 1 et 2, caractérisé par le fait qu'on utilise les composants (a1) et (a2) dans un rapport molaire de 0,5 : 1,0 à 0,9 : 1,0.

4. Procédé selon l'une quelconque des revendications 1 à 3, caractérisé par le fait que le produit d'addition utilisé comme composant (a3) contient en moyenne environ deux atomes d'hydrogène d'amine actif par molécule.

5. Procédé selon l'une quelconque des revendications 1 à 4, caractérisé par le fait que la composition de revêtement de base contient des pigments métalliques en paillettes.

6. Substrat revêtu par un revêtement à plusieurs couches, protecteur et/ou décoratif, caractérisé par le fait qu'il a été obtenu par le procédé tel que défini à la revendication 1.

7. Utilisation de résines synthétiques, qui ont été obtenues en faisant réagir :
   (a1) un diol, et
   (a2) un diisocyanate aliphatique et/ou cycloaliphatique
pour obtenir un prépolymère (A) contenant des groupes isocyanate, puis en faisant réagir les groupes isocyanate du prépolymère (A) au moins en partie avec
   (a3) un produit d'addition contenant au moins un atome d'hydrogène d'amine actif, et obtenu à partir d'un ester d'acide (méth)acrylique, de préférence, un ester de l'acide acrylique, et d'un composé aliphatique ou cycloaliphatique contenant au moins deux atomes d'hydrogène d'amine,
en tant que liants dans des compositions de revêtement qui sont appropriées pour la préparation de la couche de base de laquages à deux couches du type revêtement de base/revêtement transparent.